# EUROPEAN PATENT APPLICATION

(11) **EP 4 148 619 A1**
(43) Date of publication of application: **15.03.2023**
(21) Application number: 21196033.1
(22) Date of filing: 10.09.2021
(51) Int. Cl.: G06K 9/62, G06V 20/56

(54) **METHOD AND DEVICE FOR LANE PROPERTY DETECTION AND PLAUSIBILISATION USING A CAMERA SYSTEM INSTALLED AT AN AUTOMATED VEHICLE AND COMPRISING AT LEAST THREE CAMERAS**

(71) Applicant: Bayerische Motoren Werke Aktiengesellschaft, 80809 München (DE)
(72) Inventor: Bilra, Manjeet Singh, 85457 Hörlkofen (Wörth) (DE); Abdelhameed, Mohamed-Saad, 85221 Dachau (DE)

(57) **Abstract**

Provided is a method for lane properties detection and plausibilisation using a camera system being installed at an automated vehicle and comprising at least three cameras. The method comprises capturing image data with a first one of the at least three cameras and detecting a first lane color based on the image data captured by the first one of the at least three cameras, capturing image data with a second one of the at least three cameras and detecting a second lane color based on the image data captured by the second one of the at least three cameras, capturing image data with a third one of the at least three cameras and detecting a third lane color based on the image data captured by the third one of the at least three cameras, and performing a majority voting on the first, the second and the third lane color to determine the lane color as the majority voted color.

## Description

The present invention is directed to a method for lane property, e.g. lane color, detection and plausibilisation using a camera system being installed at an automated vehicle and comprising at least three cameras.

In autonomous driving detection of objects, obstacles and driving lanes plays a pivotal role for a higher level of autonomy.

In US2016350603A1 a method for lane detection is disclosed, wherein the method includes generating an edge image including inbound edges of lane-markings corresponding to a road image. Based on an adaptive thresholding of intensity of lane-markings from image strips selected from the image, a plurality of lane masks are extracted. A plurality of valid lane masks are selected from the plurality of lane masks based on a structure and intensity information of the plurality of valid lane masks in the image strips. An overlap between the inbound edges and the valid lane masks is determined to identify a plurality of edge segments of the pair of inbound edges belonging to the lane-markings. A set of valid edge segments of the pair of inbound edges is obtained based on the curvature information of the edge segments.

US 2021/094566 A1 describes a method for detecting a lane for a transverse guidance of a vehicle. The transverse guidance of the vehicle is based on a roadway model. The method has the steps of ascertaining one or more features which are suitable for influencing the detection of the lane; detecting a lane on the basis of a sensor system of the vehicle; and ascertaining the roadway model on the basis of the detected lane and the ascertained one or more features. The method optionally has the steps of additionally receiving navigation data and transversely guiding the vehicle on the basis of the ascertained roadway model.

In this context, a detection of lane properties, such as a color of a lane (marking), especially with ASIL integrity, is very important, e.g., considering a vehicle reaction in case the lane color changes from white lanes to yellow lanes (at least in Europe) indicating a construction/obstruction on the road. Such kind of scenarios are important to identify and react to automated without a need for human intervention.

Here ASIL is the Automotive Safety Integrity Level which is a risk classification scheme defined by the ISO 26262 - Functional Safety for Road Vehicles standard. This is an adaptation of the Safety Integrity Level (SIL) used in IEC 61508 for the automotive industry. This classification helps defining the safety requirements necessary to be in line with the ISO 26262 standard. The ASIL is established by performing a risk analysis of a potential hazard by looking at the Severity, Exposure and Controllability of the vehicle operating scenario. The safety goal for that hazard in turn carries the ASIL requirements.

There are four ASILs identified by the standard: ASIL A, ASIL B, ASIL C, ASIL D. ASIL D dictates the highest integrity requirements on the product and ASIL A the lowest. Hazards that are identified as QM do not dictate any safety requirements.

However, known methods for determining properties of lane often do not provide a certain safety integrity level needed in autonomous driving.

In light of this prior art, the object of the present invention is to provide a device and/or a method being suitable for overcoming at least the above-mentioned disadvantages of the prior art, respectively.

The object is solved by the features of the independent claims. The dependent claims have preferred further embodiments of the invention as their subject matter.

More specifically, the object is solved by a method for lane property detection and plausibilisation using a camera system being installed at an automated vehicle and comprising at least three, optionally four, cameras.

The at least three cameras may be part of a surround view system and/or may be an independent camera system.

The method is characterized by comprising a step of capturing image data with a first one of the at least three cameras and detecting a first lane property based on the image data captured by the first one of the at least three cameras.

The method is further characterized by comprising a step of capturing image data with a second one of the at least three cameras and detecting a second lane property based on the image data captured by the second one of the at least three cameras.

The method is further characterized by comprising a step of capturing image data with a third one of the at least three cameras and detecting a third lane property based on the image data captured by the third one of the at least three cameras.

The method is further characterized by comprising a step of performing a majority voting on the first, the second and the third lane property to determine the lane property as the majority voted color.

In other words, image data is collected using a plurality of cameras installed at an automated vehicle. The image data may correspond to an environment around the automated vehicle. The camera system may comprise four cameras, wherein at least one of the cameras may be positioned at a front, a back, a left side and/or a right side of the automated vehicle. The cameras positioned on the right and left side of the automated vehicle may be installed in or at a respective side mirror of the automated vehicle or at another fixed position at side of the automated vehicle. The camera system may be a surround view camera system. In case the four cameras are provided as the camera system, the cameras installed at the front, the left side and the back of the automated vehicle may be used together in the method, when the lane is located on the left side of the vehicle. In case the four cameras are provided as the camera system, the cameras installed at the front, the right side and the back of the automated vehicle may be used together in the method, when the lane is located on the right side of the vehicle.

The image data collected by the plurality of cameras is collected per camera, i.e. independently from each other, and may also be processed independently from each other, i.e., the image data is not merged/fused, in order to determine the first, the second and the third lane property. Determining/Detecting the first, the second and the third lane property may be done by the first, the second and the third camera, respectively. That is, the respective camera may be configured to determine a color of the lane and optionally output the determined lane property. Alternatively or additionally, a control unit, e.g., an electronic control unit (ECU), may be provided which is configured to receive the image data, e.g., as raw data, from all or some of the cameras of the camera system and to determine the color of the lane for each one of the cameras separately and/or independently Separately does not necessarily mean time-shifted, but means that also in case of a (central) control unit, the image data of the cameras is not merged for determining the respective lane property.

After the first, the second and the third lane properties are determined, wherein these may be called provisional lane properties, the majority voting is performed using the first, the second and the third lane properties as input data. That is, a voting system is implemented where the individual cameras of the camera system report their detected lane property independently from all other cameras. Each one of the reported lane properties, i.e., lane property information, is compared to each other to ensure the highest voting "wins", is selected as the ground truth and optionally output, e.g., to the automated vehicle directly and/or to a validator as described in detail below.

The lane may also be called lane or road marking or road surface marking. The lane may be a colored marking on the surface of traffic areas of road traffic. The lane may be a solid lane and/or a dashed lane, wherein the lane may be a single or a double lane. Colors of the lane may include inter alia white and yellow.

The image data used for detecting the first, the second and/or the third lane property may be captured by the respective one of the at least three cameras at the same time.

That is, in case of having a time synchronized camera system where each one of the cameras comprises a (slave) clock being synchronized to a global time of a grand master, the image data used for detecting the first, the second and/or the third lane property may have the same timestamp.

At least two of the at least three cameras may comprise at least partly overlapping fields of view. The lane property to be determined based on the image data captured by the at least two of the at least three cameras, e.g., the first and the second lane property in case the first and the second camera of the camera system have the overlapping fields of view, is determined in a region in which the at least partly overlapping fields of view overlap.

The first, the second and/or the third lane property may be detected at the same geometrical location.

This might mean in one concrete example not limiting the scope of the invention, that the camera installed at the front of the automated vehicle may have a field of view partly overlapping with the camera installed on the left side of the vehicle. Therefore, the camera at the front and the camera at the left side of the vehicle see at the time the same geometrical location, wherein this geometrical location is located on the lane and in an area/region where the two fields of view overlap. Therefore, it is possible that the camera at the front and the camera at the left side determine the color of the lane at the same geometrical location at the same time. These two determined colors should be same. However, the camera installed at the back of the vehicle may not have an overlapping field of view with the camera installed at the left side and the camera installed at the front of the vehicle. Therefore, the camera at the back of the vehicle does not see the geographical location at which the camera at the front and the camera at the left side determine the color of the lane. Thus, it is possible that the camera at the back measures/determines the color of the lane at the same time but at a different location, wherein this color may be different from the color determined by the camera at the front and the camera at the left side. However, due to the above described majority voting, the lane property determined by the method will be the one determined by the camera at the front and the left side of the vehicle. Moreover, if the velocity and acceleration of the automated vehicle is known, the camera installed at the back may determine the color of the lane at the same geographical location but at a later point in time. Then, the data (here the color) input to the majority voting from the camera at the back of the vehicle may have another timestamp than the data (here the color) provided by the camera installed at the front and the side of the vehicle. Both options are possible, alternatively or together. As already stated above, this is just one specific example not limiting the scope of the invention as defined by the claims since it is obvious for the skilled person that a plurality of other constellations are possible and covered by the invention.

Moreover, additionally or alternatively, determining the first, the second and/or the third lane property may include measuring the lane property at atleast one, preferably multiple, more preferably three to five, data sample(s) being located at or in a vicinity of a center of the lane.

The method may further include detecting the lane, and optionally the center of the lane, using the captured image. However, this information may also be input information of the method.

For marking the lane a bounding box, in case of multiple detected lane segments multiple bounding boxes, may be used to mark the detected lane. The bounding box(es) may be used to determine a center of the lane (segment). It is possible that the center of the lane (segment) is determined by determining a center of the respective bounding box. Determining the center of the bounding box may include calculating a spline running through the middle of the bounding box and parallel to a road where the lane is located. In case of a bounding box marking a lane segment, determining the center of the bounding box may include calculating a line being perpendicular to the calculated spline and having substantially the same distance to outer boundaries of the bounding box, the outer boundaries being also substantially perpendicular to the calculated spline.

In the vicinity of the center of the lane may mean, that the data sample is not interfering with an outer edge/boundary of the bounding box. The data sample may also be called image section or measuring area (for the first lane properties). That is, the lane property may not be determined using the whole image/frame captured by one of the cameras, but using only certain parts of the captured image data corresponding to the center and/or the vicinity of the center of the lane.

Determining the lane property may be done using a deterministic algorithm and/or an algorithm being based on artificial intelligence. Determining the lane property may comprise taking a first data sample located at the center of the detected lane, and taking at least one second data sample located in the vicinity of the center of the detected lane such that the at least one second data sample at least partly overlaps with the first data sample. Determining the lane property from the captured image data may further comprise extracting the lane property from the first and the at least one second data sample.

The method may further comprise performing a first plausibility check, wherein the first plausibility check comprises comparing the determined lane property to at least one previously determined lane property.

The method may further comprise labelling the determined lane property as QM or invalid if a result of the comparison of the first plausibility check is that a difference between the previously determined lane property and the determined lane property exceeds a first predefined threshold, and labelling the determined lane property as ASIL if a result of the comparison of the first plausibility check is that the difference between the previously determined lane property and the determined lane property is below the first predefined threshold.

The method may further comprise merging the image data captured by the first, the second and the third one of the at least three cameras, and determining a fourth lane property based on the merged image data. The fourth lane property may also be called merged image data lane property.

The method may even further comprise performing a second plausibility check, wherein the second plausibility check comprises comparing the determined lane property to the determined fourth lane property.

The method may further comprise labelling the determined lane property as QM if a result of the comparison of the second plausibility check is that a difference between the fourth lane property and the determined lane property exceeds a second predefined threshold, and labelling the determined lane property as ASIL if a result of the comparison of the second plausibility check is that the difference between the fourth lane property and the determined lane property is below the second predefined threshold.

The above given description may be summarized in a more concrete manner and in other words as follows.

A solution for road lane property detection and plausibilisation to achieve a desired safety integrity based on image perception and statistical data for autonomous vehicles is provided.

The concept may be based on the principle that each or at least some of the cameras detect the lane property at the same geometrical location, i.e., each lane boundary box may be detected by a minimum of three cameras (e.g., front camera alone, left side camera alone and rear camera alone, or front camera alone, right side camera alone and rear camera alone).

A voting system could be used where the individual cameras report the detected lane property independent from all other cameras. Each reported lane information, i.e lane property information, is compared to each other to ensure the highest voting wins and is selected as the ground truth.

The voting data could also be compared to a statistical output. This statistical output may be derived by creating independent statistical libraries for one, some or all of the cameras.

In addition or alternatively to that, the system could also save a short history of previous frames, which could further be compared to the highest voted lane property or lane attribute.

A parallel algorithm could be created, where the data from each or at least some of the cameras is merged with each other to calculate the lane properties or lane property with the highest probability of that particular information based on the fused/merged data.

In the final step the third layer of plausibility may be used where the merged perspective of lane property from the fused data of all cameras is plausibilized to that of the highest voted lane property information. In case of mismatch, the safety integrity may be removed and the lane property could be marked as QM without any safety integrity. If the plausiblization passes (i.e., in case of match), then the lane property can be provided with safety integrity.

The first camera may (or may not) be part of a surround view camera system. It could also be the main front camera, which is developed completely independent from the surround view camera system. The output of the other cameras used in the method may the output of the surround view camera system and may be plausibilised with respect to the output of the independent front camera.

Furthermore, a data processing device comprising means for carrying out the above described method at least partly is provided, wherein the description given above with respect to the method applies mutatis mutandis to the data processing device and vice versa.

The data processing device may be a control unit configured to control the automated vehicle. The data processing device may be connected to the camera system.

It is possible that an automated vehicle comprising the data processing device is provided. The automated vehicle may be configured to take over a longitudinal and/or transverse guide of the automated vehicle at least partly and/or at least temporarily. The automated vehicle may comprise the camera system.

Furthermore a computer program product and/or a computer-readable storage medium comprising instructions which, when executed by a computer, cause the computer to carry out the above described method at least partly is provided, wherein the description given above with respect to the method and the data processing device applies mutatis mutandis to the computer program product and the computer-readable storage medium and vice versa.

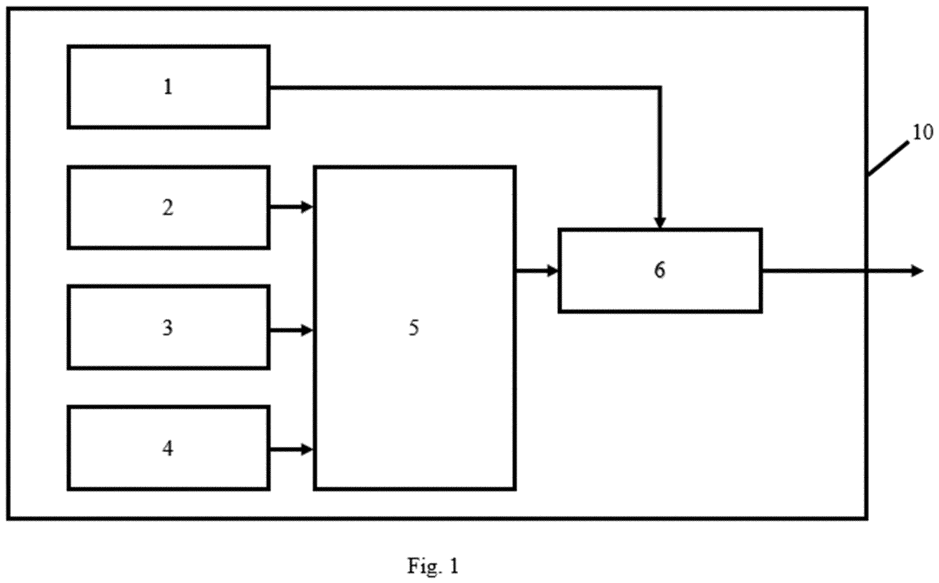

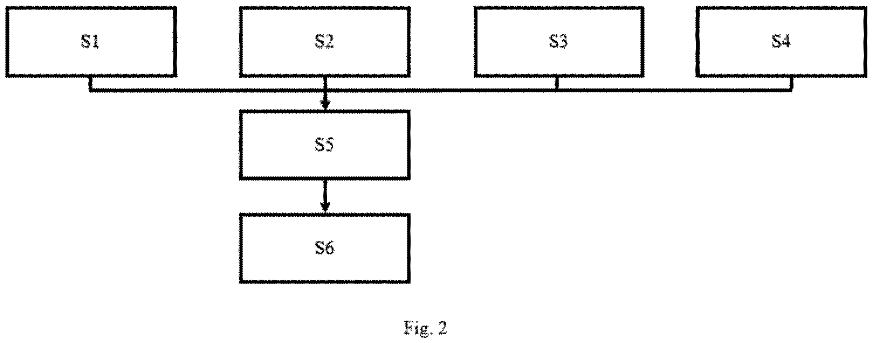

An embodiment is described with reference to figures 1 and 2 below.
- Fig. 1: shows schematically a data processing device configured to carry out a method for lane property, here lane color, detection and plausibilisation using a camera system being installed at an automated vehicle and comprising at least three cameras, and
- Fig. 2: shows a flow diagram of the method for lane property, here lane color, detection and plausibilisation using the camera system being installed at the automated vehicle and comprising the at least three cameras.

In the present embodiment described with reference to figures 1 and 2, the lane property to be detected is a lane color. However, this is just one specific example and the invention is not limited to lane color detection and various other lane properties, such as a shape of the lane, may be detected by the method.

As can be gathered from figure 1, the data processing device 10 comprises an image data fusion module 1, a first lane color detection module 2, a second lane color detection module 3, a third lane color detection module 4, a majority voting module 5, and a plausibilisation module 6.

The data processing device 10 is connected to a (not shown) camera system being installed at an automated vehicle, here a car, and comprising four and or five cameras, wherein one or more than one cameras are positioned at a front, one of the four cameras is positioned at a back, one of the four cameras is positioned at a left side and one of the four cameras is positioned at a right side of the automated vehicle.

In this specific example given below, solely the cameras at the front, left side and back/rear side of the automated vehicle are used to detect the lane color. However, it would also be possible to use all four cameras or any other combinations of the four cameras to detect the lane color.

In a first step S1 of the method, image data is captured by the front camera, and output by the front camera to the image data fusion module 1 and the first lane color detection module 2, respectively. The first lane color detection module 2 detects a first lane color based on the image data captured by the front camera. The first lane color is output to the majority voting module 5.

In a second step S2 of the method, image data is captured by the camera on the left side of the automated vehicle, and output by the camera on the left side of the automated vehicle to the image data fusion module 2 and the second lane color detection module 3, respectively. The second lane color detection module 3 detects a second lane color based on the image data captured by the camera on the left side of the automated vehicle. The second lane color is output to the majority voting module 5.

In a third step S3 of the method, image data is captured by the rear camera, and output by the rear camera to the image data fusion module 2 and the third lane color detection module 4, respectively. The third lane color detection module 4 detects a third lane color based on the image data captured by the rear camera. The third lane color is output to the majority voting module 5.

Here, the front camera and the camera on the left side of the automated vehicle comprise partly overlapping fields of view, and the rear camera does not comprise a field of view neither overlapping with the field of view of the front camera nor the camera on the left side of the automated vehicle. However, it would also be possible that the rear camera is used with the left side camera to detect the lane property at the same geometrical location.

The first and the second lane color are detected in a region in which the at least partly overlapping fields of view overlap and at the same (first) geometrical location. Since the image data used for detecting the first, the second and the third lane color is captured by the respective one of the three cameras at the same time (i.e., with the same time, the third lane color which is determined based on the image data captured by the rear camera is detected at a different (second) geometrical location.

In a fourth step S4 of the method, the image data captured by the first, the second and the third one of the at least three cameras is merged by the image data fusion module 1. The image data fusion module determines a fourth lane color based on the merged image data. The fourth lane color is output to the plausibilisation module 6.

The above described first to fourth steps S1 - S4 are carried out at least partly simultaneously by the data processing device 10 according to the flowchart shown in figure 2, but the invention is not limited thereto and it is also possible that the first to fourth steps S1 - S4 are carried sequentially/after each other in any possible combination. Also a fifth step S5, which may be explained in detail below, may be carried out after, simultaneously to, after or any combination thereof to the fourth step S4.

In the fifth step S5 of the method, the majority voting module 5 performs a majority voting on the first, the second and the third lane color to determine the lane color as the majority voted color. The determined lane color, i.e. the majority voted lane color, is output to the plausibilisation module 6.

In a sixth step S6 of the method, the plausibilisation module 6 performs a first plausibility check, wherein the first plausibility check comprises comparing the determined/majority voted lane color (i.e., the lane color received from the majority voting module 5) to at least one previously determined lane color (i.e., to a lane color previously received from the majority voting module 5, e.g., in a previous cycle of carrying out the method when the method is carried out cyclically). It is also possible that the plausibilisation module 6 takes input from an independent camera source for plausibilisation.

In case that a result of the comparison of the first plausibility check is that a difference between the previously determined lane color and the (currently/actually) determined lane color exceeds a first predefined threshold, the plausibilisation module 6 labels the determined lane color only as being QM. Otherwise, in case that the result of the comparison of the first plausibility check is that the difference between the previously determined lane color and the determined lane color is below the first predefined threshold, the plausibilisation module 6 labels the determined lane color as being ASIL (e.g., ASIL B or D).

In the sixth step S6 of the method, the plausibilisation module 6, additionally or alternatively, performs a second plausibility check, wherein the second plausibility check comprises comparing the determined/majority voted lane color to the determined fourth lane color received from the image data fusion module 1.

In case that a result of the comparison of the second plausibility check is that a difference between the previously determined lane color and the (currently/actually) determined lane color exceeds a second predefined threshold, the plausibilisation module 6 labels the determined lane color only as being QM. Otherwise, in case that the result of the comparison of the second plausibility check is that the difference between the previously determined lane color and the determined lane color is below the second predefined threshold, the plausibilisation module 6 labels the determined lane color as being ASIL (e.g., ASIL B or D).

The first and the second threshold may be the same or different from each other.

In the sixth step S6 of the method, the plausibilisation module 6 outputs the labelled (QM or ASIL as explained above) determined lane color, to the automated vehicle.

The method may comprise an optional seventh step (not shown) of controlling the automated vehicle based on the labelled (QM or ASIL as explained above) determined lane color. Controlling the automated vehicle may comprise controlling a longitudinal and/or transverse guide of the automated vehicle at least partly and/or at least temporarily.

### Reference signs list

- 10: data processing device
- 1: image data fusion module
- 2: first lane color detection module
- 3: second lane color detection module
- 4: third lane color detection module
- 5: majority voting module
- 6: plausibilisation module
- S1 - S6: steps of the method

## Claims

1. Method for lane color detection and plausibilisation using a camera system being installed at an automated vehicle and comprising at least three cameras, **characterized in that** the method comprises:
- capturing image data (S1) with a first one of the at least three cameras and detecting a first lane color (S1) based on the image data captured by the first one of the at least three cameras,
- capturing image data (S2) with a second one of the at least three cameras and detecting a second lane color (S2) based on the image data captured by the second one of the at least three cameras,
- capturing image data (S3) with a third one of the at least three cameras and detecting a third lane color (S3) based on the image data captured by the third one of the at least three cameras, and
- performing a majority voting (S5) on the first, the second and the third lane color to determine the lane color as the majority voted color.

2. Method according to claim 1, **characterized in that** the image data used for detecting the first, the second and/or the third lane color is captured by the respective one of the at least three cameras at the same time.

3. Method according to claim 1 or 2, **characterized in that** at least two of the at least three cameras comprise at least partly overlapping fields of view, wherein the lane color to be determined based on the image data captured by the at least two of the at least three cameras is determined in a region in which the at least partly overlapping fields of view overlap.

4. Method according to any of claims 1 to 3, **characterized in that** the first, the second and/or the third lane color is detected at the same geometrical location.

5. Method according to any of claims 1 to 4, **characterized in that** the method further comprises performing a first plausibility check (S6), wherein the first plausibility check comprises comparing the determined lane color to at least one previously determined lane color.

6. Method according to claim 5, **characterized in that** the method further comprises:
- labelling the determined lane color as QM if a result of the comparison of the first plausibility check is that a difference between the previously determined lane color and the determined lane color exceeds a first predefined threshold, and
- labelling the determined color as ASIL if the result of the comparison of the first plausibility check is that the difference between the previously determined lane color and the determined lane color is below the first predefined threshold.

7. Method according to any of claims 1 to 6, **characterized in that** the method further comprises:
- merging the image data (S4) captured by the first, the second and the third one of the at least three cameras,
- determining a fourth lane color (S4) based on the merged image data, and
- performing a second plausibility check (S6), wherein the second plausibility check comprises comparing the determined lane color to the determined fourth lane color.

8. Method according to claim 7, **characterized in that** the method further comprises:
- labelling the determined lane color as QM if a result of the comparison of the second plausibility check is that a difference between the fourth lane color and the determined lane color exceeds a second predefined threshold, and
- labelling the determined lane color as ASIL if the result of the comparison of the second plausibility check is that the difference between the fourth lane color and the determined lane color is below the second predefined threshold.

9. Data processing device (10) comprising means for carrying out the method according to any of claims 1 to 8.

10. A computer program product and/or computer-readable storage medium comprising instructions which, when executed by a computer, cause the computer to carry out the method according to any of claims 1 to 8.
